# EUROPÄISCHE PATENTSCHRIFT

(11) **EP 1 506 834 B1**
(45) Veröffentlichungstag und Bekanntmachung des Hinweises auf die Patenterteilung: **20.08.2008**
(21) Anmeldenummer: 04010150.3
(22) Anmeldetag: 29.04.2004
(51) Int. Cl.: B23K 26/28, B23K 35/02, B23K 37/053, F16L 13/02, G01F 23/00

(54) **Verfahren zum Schweissen einer Schweissnaht zwischen zwei Bauteilen eines Füllstandmessgeräts**
Method of welding a seam between two workpieces of a level measuring device
Méthode de soudage pour souder un joint entre deux pièces d'un appareil de mesure de niveau

(30) Priorität: 09.08.2003 DE 10336693
(43) Veröffentlichungstag der Anmeldung: 16.02.2005
(73) Patentinhaber: VEGA Grieshaber KG, 77709 Wolfach (DE)
(72) Erfinder: Becherer, Frank, 77716 Haslach (DE)
(74) Vertreter: Patentanwälte Westphal, Mussgnug & Partner

(56) Entgegenhaltungen:
- EP-A- 0 095 976
- EP-A- 0 204 145
- EP-A- 0 525 469
- WO-A-91/15702
- DE-A- 4 203 715
- GB-A- 706 015
- US-A- 4 134 607
- US-A- 5 090 612

## Beschreibung

Verfahren zum Schweißen einer Schweißnaht zwischen zwei Bauteilen eines Füllstandmessgeräts und derart hergestelltes Füllstandsmessgerät.

Die Erfindung bezieht sich auf ein Verfahren zum Schweißen einer Schweißnaht zwischen zwei Bauteilen eines Fülldraht eines Füllstandsmeßgeräts mit den oberbegrifflichen Merkmalen des Patentanspruchs 1 (siehe, z.B. DE 42 03 715 A).

Allgemein bekannt ist es, zwei Bauteile aneinanderzusetzen und unter Ausbildung einer Schweißnaht zusammenzuschweißen. Ggf. wird dabei ein Schweißzusatzstoff in Form eines Drahtes zugeführt und in das Schweißbad eingebracht. Das erste und das zweite Bauteil werden dabei mit dem Schweißzusatzstoff unter Hitzezuführung aneinandergeschweißt.

Bei der Herstellung eines Füllstandsmessgeräts besteht die Problematik, an ein Prozessanschlussteil mit einer Öffnung ein Rohr anzuschweißen. Üblicherweise werden dabei Prozessanschlussteile und Rohre oder auch zwei Rohre untereinander zusammengeschweißt, welche aus einem hochwertigen Stahl, z.B. V4A-Stahl bestehen.

Besonders problematisch ist das Schweißen von Rundnähten unter Verwendung eines Schweißzusatzwerkstoffs an rotationssymmetrischen Körpern, wie derartigen Rohren. Insbesondere bei Laserschweißungen ist es erforderlich, einen solchen Schweißzusatzwerkstoff mit hoher Präzision an einen Schweißstoß zwischen zwei miteinander zu verschweißenden Bauteilen zuzuführen.

Da dies sehr schwierig ist, werden Laserschweißungen als Rundnaht in der Regel ohne Zusatzwerkstoff ausgeführt. Ist es jedoch erforderlich, z.B. auf Grund der zu verschweißenden Werkstoffpaarung einen Schweißzusatzwerkstoff zu verwenden, so muss dieser in Drahtform hochpräzise in das Schweißbad zugeführt werden. Die genaue Positionierung ist dabei erforderlich, weil der Laserstrahl einen sehr kleinen Wirkpunkt besitzt. Ändert sich die Positionierung des Drahtes in nur einem kleinen Bereich, so ist die Qualität der Schweißnaht oftmals nicht mehr ausreichend oder der Prozess wird durch einen Anlagenstillstand gestört.

Aus US 4,134,607 ist ein ähnliches Schweißverfahren bekannt. Die DE 4203715 A1 beschreibt Schweißnähte bei Füllstandsmessgeräten.

Die Aufgabe der Erfindung besteht darin, ein Verfahren zum Schweißen einer Schweißnaht zwischen zwei Bauteilen eines Füllstandsmeßgerätes mit Blick auf die Präzision des Schweißvorgangs und der entstehenden Schweißnaht zu verbessern.

Diese Aufgabe wird durch ein Verfahren zum Schweißen einer Schweißnaht zwischen zwei Bauteilen mit den Merkmalen des Patentanspruchs 1.

Ausgegangen wird von einem Verfahren zum Schweißen einer Schweißnaht zwischen zwei Bauteilen, insbesondere beim Herstellen eines Füllstandsmessgeräts, wobei bei dem Verfahren ein erstes Bauteil und ein zweites Bauteil aneinandergesetzt werden, ein Schweißzusatzstoff bereitgestellt bzw. zugeführt wird und das erste Bauteil und das zweite Bauteil mit dem Schweißzusatzstoff unter Hitzezuführung aneinander geschweißt werden.

Gemäß der Erfindung ist somit, einen vorgeformten Schweißzusatzstoff bereitzustellen. Die Form des Schweißzusatzstoffes ist dabei dem Bereich der Schweißnaht bei den beiden zu verschweißenden Bauteilen angepasst.

Vorteilhafte Ausgestaltungen sind Gegenstand abhängiger Ansprüche.

Gemäß der Erfindung, bei einem Bauteil mit einem kreisförmigen Abschluss, der an das andere Bauteil anzuschweißen ist, ist, wenn der Schweißzusatzstoff ringförmig ausgebildet und bereitgestellt wird. Der Schweißzusatzstoff wird dann im Bereich der Schweißnaht bzw. des Schweißstoßes bereitgestellt, um in einer für den Schweißvorgang optimalen Lage ausgerichtet zu werden. Seitliche Variationen und Bewegungen wie bei dem Zuführen eines Drahtes als Schweißzusatzstoff werden vermieden. Natürlich kann der Schweißzusatzstoff auch in anderen Formen bereitgestellt werden, wenn die miteinander zu verschweißenden Bauteile keinen kreisförmigen Abschluss aufweisen.

Ein Ausführungsbeispiel wird nachfolgend anhand der Zeichnung näher erläutert. Es zeigt:

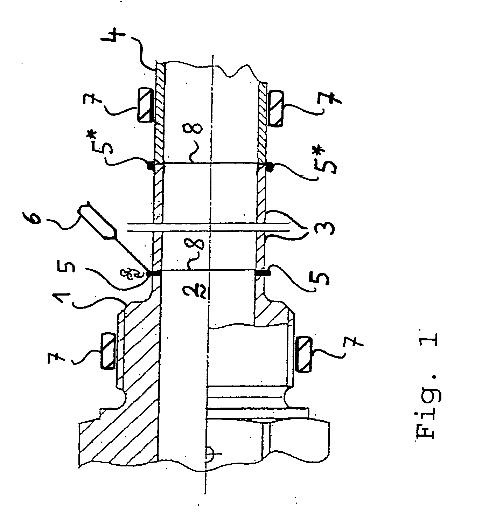

- Fig. 1: einen Querschnitt durch drei miteinander verschweißte Bauteile und Elemente einer Schweißvorrichtung.

Wie dies aus Fig. 1 ersichtlich ist, sollen mehrere Bauteile 1, 2, 4 miteinander verschweißt werden. Bei dem dargestellten Ausführungsbeispiel handelt es sich um ein Prozessanschlussteil 1 eines Füllstandmessgerätes mit einer Öffnung 2. Im Randbereich der Öffnung 2 soll an das Prozessanschlussteil 1 als Gegenstück ein Verlängerungsrohr 3 angeschweißt werden. Außerdem ist ein weiteres Bauteil 4 dargestellt, beispielsweise ein weiteres Rohrstück, welches an das gegenüberliegende Ende des Verlängerungsrohrs 3 angeschweißt werden soll.

Zum Zusammenschweißen der drei Teile werden diese oder jeweils zwei der Bauteile passend aneinandergesetzt, wobei im Bereich des Schweißstoßes jeweils ein Schweißzusatzstoff 5, 5* zwischengesetzt wird. Der Schweißzusatzstoff 5, 5* besteht aus einem Werkstoff, welcher zum Verbinden der jeweils benachbarten Bauteile 1, 3 bzw. 3, 4 besonders gut geeignet ist. Derart zusammengesetzt wird anschließend die Schweißnaht durch Verschweißen der beiden benachbarten Bauteile 1, 3; 3, 4 mit dem Schweißzusatzstoff 6 ausgebildet. Vorzugsweise wird dazu eine Schweißeinrichtung 5, 5* verwendet, welche einen Laserstrahl auf den Schweißzusatzstoff 5, 5* bzw. die entstehende Schweißnaht 8 richtet.

Um den Schweißzusatzstoff 5, 5* optimal zwischen die beiden miteinander zu verschweißenden Bauteile 1, 3; 3, 4 zu bringen wird als Schweißzusatzstoff ein geformter Schweißzusatzstoff 5, 5* bereitgestellt und verwendet. Im Fall miteinander zu verbindender rohrförmiger Bauteile 1, 3; 3, 4 wird der Schweißzusatzstoff gemäß der Erfindung ringförmig geformt bereitgestellt. Bevorzugt wird dabei eine abgeflachte Form vergleichbar einem Dichtungsring, welcher im Rohrleitungsbau zwischen zwei stirnseitige Rohrenden gesetzt wird, um diese abzudichten. Vorliegend besteht der geformte Schweißzusatzstoff 5, 5* jedoch aus einem Zusatzwerkstoff zum Ausbilden einer Schweißnaht.

Eine Schweißvorrichtung zum Unterstützten eines solchen Schweißverfahrens weist vorzugsweise Halteeinrichtungen 7 zum Einspannen der miteinander zu verschweißenden Bauteile 1, 4 auf. Die Bauteile 1, 3, 4 werden nach dem Einsetzen der geformten Schweißzusatzstoffe 5, 5* in den Bereich der Schweißstöße in der Halteeinrichtung 7 derart eingespannt, dass die einzelnen Bauteile und die Schweißzusatzstoffelemente 1, 3 - 4 optimal zueinander positioniert sind. Nachfolgend werden mit der Schweißeinrichtung 6 als ein Bestandteil der Schweißvorrichtung die Schweißnaht bzw. vorliegend die beiden Schweißnähte 8 durch Verschweißen der Bauteile und des Schweißzusatzstoffes ausgebildet. Im Fall eingespannter rohrförmiger Bauelemente kann die Schweißvorrichtung dabei derart ausgebildet sein, dass die Schweißeinrichtung 6 automatisch um die zu verschweißenden Teile herum gedreht wird oder die eingespannten zu verschweißenden Bauteile um eine zentrale Rotationsachse rotiert werden. Je nach zu verschweißenden Werkstoffen ist die Schweißvorrichtung auch ausgebildet, den gesamten Schweißprozess in einer entsprechend geeigneten Atmosphäre, vorzugsweise Atmosphäre ohne Luftsauerstoff, durchzuführen.

Beim Herstellen eines Füllstandmessgerätes mit einem Prozessanschlussteil 1 als einem Bauteil und einem daran angesetzten Verlängerungsrohr 3 als einem weiteren Bauteil zum Anschluss eines anderweitigen Teils, insbesondere eines weiteren Rohrstücks 4, werden als Materialien für das Prozessanschlussteil 1, das Verlängerungsrohr 3 und das weitere Rohrstück 4 Edelstähle bevorzugt, insbesondere V4A-Stahl der Werkstoffnummer 1.4435. Dieser lediglich beispielhafte Werkstoff weist einen eingeschränkten C-Gehalt von maximal 0,03 %, einen Chromgehalt von Cr 17-18 % einen Molybdängehalt von Mo 2,5-3,0 % und einen Nickelgehalt von Ni 12,5-14,0 % auf. Der Ferritgehalt der klassischen Qualität liegt bei 0 %. Zum Verschweißen dieses Werkstoffes wird als Schweißzusatzstoff 5, 5* ein Werkstoff Nr. 1.4430 oder 1.4576 bevorzugt. Der Werkstoff Nr. 1.4430 weist eine ähnliche Zusammensetzung mit den Hauptbestandteilen Chrom 19 %, Nickel 12 % und Molybdän 3 % auf und kennzeichnet sich durch einen erhöhten Delta δ- Ferritgehalt

Das Einsetzen des Schweißzusatzstoffes 5 zwischen zwei zu verschweißende Bauteile 1, 3 ermöglicht vorteilhafterweise die Fertigung einer besonders hochqualitativen Schweißnaht 8. (Ausführungsbeispiel, das nicht unter dem Gegenstand der Erfindung steht). Weiter verbessert wird die Verfahrensweise dadurch, dass der Schweißzusatzstoff 5 bereits derart vorgeformt ist, dass er optimal in den Schweißstoß zwischen die beiden zu verschweißenden Bauteile 1, 3 zwischengesetzt werden kann. Neben dem Zwischensetzen des Schweißzusatzstoffes 5 zwischen die beiden zu verschweißenden Bauteile 1, 3 ist gemäß der Erfindung das Bereitstellen eines geformten Schweißzusatzstoffes 5* vorteilhaft, der im Fall zu verschweißender Rohrstücke ringförmig ausgebildet ist mit einem Innendurchmesser, welcher dem Außendurchmesser der zu verbindenden Rohrstücke entspricht. Ein solcher geformter Schweißzusatzstoff 5* wird dann über den Schweißstoß gelegt, bevor die Scheißnaht 8 mit Hilfe der Schweißeinrichtung 6 durch Aufschmelzen der benachbarten Komponenten ausgebildet wird.

## Patentansprüche

1. Verfahren zum Schweißen einer Schweißnaht (8) zwischen zwei ringförmigen Bauteilen (3, 4) eines Füllstandsmessgeräts, bei dem
- ein erstes Bauteil (3) und ein zweites Bauteil (4) aneinandergesetzt werden, **dadurch gekennzeichnet, dass**
- ein Schweißzusatzstoff (5*) bereitgestellt wird und
- das erste Bauteil (3) und das zweite Bauteil (4) mit dem Schweißzusatzstoff (5*) unter Hitzezuführung aneinander geschweißt werden,
- der Schweißzusatzstoff (5) ringförmig vorgeformt wird, einen Innendurchmesser aufweist, der dem Außendurchmesser der zwei aneinanderliegenden Bauteile (3, 4) entspricht, so dass die Form des Schweißzusatzstoffes (5*) der Form der Schweißnaht zumindest teilweise angepasst gewählt wird, wobei der so geformte Schweißzusatzstoff (5*) vor dem Schweißen in den Bereich der Schweißnaht (8) gesetzt, dann über den Schweißstoß gelegt und anschließend verschweißt wird.

2. Verfahren nach Anspruch 1, bei dem das erste und/oder das zweite Bauteil (3, 4) einen kreisförmigen Abschluss aufweist, der an dem anderen Bauteil anzuschweißen ist.

## Claims

1. A method for welding a weld seam (8) between two ring-shaped components (3, 4) of a filling level gauge, in which
- a first component (3) and a second component (4) are placed against one another,
cbaracterised in that
- a welding filler material (5*) is prepared and
- the first component (3) and the second component (4) are welded together using the welding filler material (5*) under the action of heat,
- the welding filler material (5*) is pre-formed in a ring shape, has an internal diameter corresponding to the outer diameter of the two components (3, 4) lying against one another, so that the shape of the welding filler material (5*) is chosen to at least partially match the shape of the welding seam, wherein the welding filler material (5*) that is thus shaped is placed in the area of the weld seam (8) prior to welding, is then laid over the joint and is subsequently welded.

2. A method according to claim 1, in which the first and/or the second component (3, 4) has a circularly shaped end, which is to be welded to the other component.

## Revendications

1. Procédé de soudage d'un cordon de soudure (8) entre deux pièces de forme annulaire (3, 4) d'un appareil de mesure de niveau de remplissage selon lequel,
- on juxtapose une première pièce (3) et une seconde pièce (4) l'une contre l'autre,
**caractérisé en ce que**
- on fournit un additif de soudage (5*), et
- on soude la première pièce (3) et la seconde pièce (4) avec l'additif de soudage (5*) l'une à l'autre avec apport de chaleur,
- on préforme l'additif de soudage (5*) en lui donnant une forme annulaire ayant un diamètre intérieur correspondant au diamètre extérieur des deux pièces (3, 4) juxtaposées pour que la forme de l'additif de soudage (5*) soit choisie de manière à être adaptée au moins en partie à la forme du cordon de soudure, l'additif de soudage (5*) ainsi préformé étant placé dans la zone du cordon de soudure (8) avant de réaliser le soudage puis placé par-dessus la jonction de soudage et ensuite soudé.

2. Procédé selon la revendication 1,
selon lequel
la première et/ou la seconde pièce (3, 4) a une terminaison circulaire que l'on soude à l'autre pièce.
